(19) Europäisches Patentamt
European Patent Office
Office européen des brevets

(11) EP 0 415 856 B1

(12) **FASCICULE DE BREVET EUROPEEN**

(45) Date de publication et mention de la délivrance du brevet:
**12.07.2000 Bulletin 2000/28**

(51) Int. Cl.[7]: **H01M 4/60**, H01M 10/40

(21) Numéro de dépôt: **90420361.9**

(22) Date de dépôt: **27.07.1990**

(54) **Générateur électrochimique rechargeable comportant des polymères à l'état solide**

Wiederaufladbarer elektrochemischer Generator mit Festkörperpolymeren

Rechargeable electrochemical generator containing solid state polymers

(84) Etats contractants désignés:
**AT BE CH DE DK ES FR GB GR IT LI LU NL SE**

(30) Priorité: **01.09.1989 CA 610115**

(43) Date de publication de la demande:
**06.03.1991 Bulletin 1991/10**

(73) Titulaire: **HYDRO-QUEBEC**
**Montréal Québec H2Z 1A4 (CA)**

(72) Inventeur: **Gauthier, Michel**
**La Prairie, Québec, J5R 1E6 (CA)**

(74) Mandataire: **Bratel, Gérard et al**
**Cabinet GERMAIN & MAUREAU,**
**12, rue Boileau,**
**BP 6153**
**69466 Lyon Cedex 06 (FR)**

(56) Documents cités:
- **PROC. ELECTROCHEM. SOC., 90-5, PROC. SYMP. RECHARGABLE LITHIUM BATTERIES, 1989,pages 220-232, Berkeley, US; M. LIU et al.: "All-solid-state thin-filmrechargeable lithium batteries using solid redox polymerization electrodes"**
- **PROC. ELECTROCHEM. SOC., 90-5, PROC. SYMP. RECHARGEABLE LITHIUM BATTERIES,1989, pages 233-245, Berkeley, US; M. LIU et al.: "Electrochemicalinvestigations of novel solid redox polymerization electrodes"**
- **JOURNAL OF THE ELECTROCHEMICAL SOCIETY, vol. 135, no. 12, December 1988, pages 2905-2909, Manchester, NH, US; S.J. Visco et al.: Ionic conductivity of organosulfur melts for advanced storage electrodes**
- **Journal of the Electrochemical Society, vol 136, No. 3, March 1989, pages 661-664, Manchester, NH, US; S. J. Visco et al.: A novel class of organsulfur electrodes for energy storage**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Xerox (UK) Business Services
2.16.7 (HRS)/3.6

## Description

La présente invention décrit un nouveau type de générateur électrochimique rechargeable entièrement à l'état solide utilisant un nouveau type de cathode constituée de composés organiques riches en liaisons de type polysulfure, c.f. -S-S-, susceptibles d'être réduites et oxydées réversiblement lors de cycles de décharge/charge.

Des générateurs à électrolytes polymères à l'état solide existent déjà et utilisent généralement des électrodes de lithium ou d'alliages de lithium, ainsi que décrits dans le brevet canadien No 1 165 814, comme anode, souvent associés à des cathodes constituées habituellement d'oxydes ou de sulfures de métaux de transition tels que par exemple: $MoO_2$, $V_6O_{13}$ $MnO_2$ et $TiS_2$. Dans tous ces systèmes l'espèce mobile mise en jeu dans l'accumulateur est l'ion $Li^+$; dans certains cas le lithium est remplacé par le sodium ou par des espèces bivalentes telles que le magnésium ou le plomb. On peut aussi utiliser des alliages de ces derniers.

La cathode des générateurs rechargeables au lithium présentement utilisés fonctionne généralement sur le principe de l'insertion d'un ion de petit diamètre susceptible de s'insérer et de se désinsérer réversiblement dans une structure minérale, cristalline ou amorphe, lors des cycles successifs de décharge/charge. D'autres matériaux de cathode ont également été décrits par exemple dans le brevet US No 4 683 181, qui mettent en jeu des réactions de déplacement du type:

$$FeS + 2Li^+ \leftrightarrow Fe + Li_2S$$

et s'avèrent rechargeables malgré une destruction complète des structures cristallines.

Plusieurs des matériaux cathodiques présentement considérées offrent des caractéristiques intéressantes; toutefois certains de ces matériaux sont coûteux, par exemple $TiS_2$, ou peu abondants, ou offrent des performances en cyclage et des densités massiques d'énergie théoriques encore limitées. La présence de métaux de transition possédant des propriétés catalytiques parfois marquées limite souvent les performances en cyclage ou la durée de vie utile de ce type de cathode.

Le soufre élémentaire, plus que les sulfures de métaux dé transition, possède des caractéristiques qui le rende attrayant comme matériau de cathode éventuel, notamment au niveau de la densité massique d'énergie voisine de 2,600 Wh/Kg vs 490 Wh/Kg pour $TiS_2$ par exemple. Diverses tentatives ont été faites pour mettre à profit le soufre et les polysulfures comme matériau de la cathode. C'est le cas, entre autres, des générateurs sodium-soufre fonctionnant à température élevée et mettant en oeuvre des solides conducteurs par les ions sodium, alumine beta et verres.

Aux températures voisines de la température ambiante le comportement de l'électrode de soufre est plus complexe et la cinétique d'oxydation des sulfures en polysulfure puis en soufre est généralement lente; Peled a résumé dans un article récent du Journal of the Electrochemical Society, Vol. 136(6), p. 1621, 1989 les avantages et limitations des générateurs lithium-soufre en milieux organiques liquides.

Un objet de la présente invention réside dans la réalisation d'une électrode positive à base de polysulfures et constitué d'une classe de matériaux organiques solides mettant en jeu une réaction de dépolymérisation/polymérisation redox par coupure des liaisons -S-S- présentes dans le matériau organique.

Un autre objet de l'invention est de rendre la réaction impliquant le soufre réversible par un mécanisme de conjugaison qui permet la délocalisation des charges qui sont mises en jeu par le processus électrochimique entre les atomes de soufre et des atomes d'azote en position conjugée.

Un autre objet de l'invention est de faire en sorte que les matériaux constituant l'électrode positive bénéficient de certaines des caractéristiques du soufre élémentaire et présentent des avantages potentiels marqués comparativement aux matériaux déjà connus, notamment au niveau du cyclage, de l'énergie massique, du coût et de leur abondance.

Un autre objet de l'invention réside dans l'utilisation de matériaux particulièrement bien adaptés pour les applications où le coût, la facilité de mise en oeuvre ainsi que la densité massique d'énergie d'un générateur sont critiques, notamment dans le cas des générateurs destinés à la propulsion électrique.

Un autre objet de la présente invention consiste en la mise au point de générateurs rechargeables à électrolytes polymères, fonctionnant préférentiellement au lithium et dans lesquels des matériaux d'électrodes à polymérisation redox sont utilisés comme cathode.

La présente invention concerne un générateur électrochimique rechargeable à l'état solide comprenant une anode d'un métal M, sous forme généralement pur ou allié pouvant constituer une source de cations dudit métal, en contact avec un électrolyte polymère constitué d'au moins un sel dudit métal M de l'anode dissous dans un polymère solvatant contenant des hétéroatomes d'oxygène et/ou d'azote capables de solvater les cations dudit métal M, M représentant un métal pouvant entrer dans la composition d'une anode qui peut être mise en contact avec ledit électrolyte polymère et, d'une cathode également en contact avec ledit électrolyte et avec un conducteur électronique constitué d'au moins un métal, de noir de carbone ou d'un polymère conducteur électronique; ladite cathode à l'état au moins partiellement chargé contenant au moins un polymère caractérisé par des chaînes du type X-S-R-S-(S-R-S)$_n$-S-R-S-

X',

où

n est un nombre égal ou supérieur à 0,

X et X' sont soit un métal y compris le métal M, soit l'hydrogène ou un groupement organique terminal,

S est le soufre et

R désigne un groupement organique, cyclique et difonctionnel comportant des carbones porteurs des deux atomes de soufre S du dithiol, lesdits carbones étant liés chimiquement avec au moins un atome d'azote de façon à permettre la délocalisation par conjugaison du type,

$$S^{\ominus}\text{-C=N-} \leftrightarrow \text{S=C-N}^{\ominus}\text{-}$$

de la charge négative et la réduction électrochimique réversible des atomes de soufre S lors de la coupure des liens -S-S- pour donner des chaînons plus courts terminés aux deux extrémités par des groupes -S-R-SM, lorsque la cathode est à l'état plus ou moins déchargé.

Selon une réalisation préférée de l'invention, le groupement R est un hétérocycle permettant à chaque atome de soufre rattaché à ce cycle d'assurer une conjugaison des liaisons avec au moins un atome d'azote de l'hétérocycle. De préférence, le groupement R est choisi parmi l'uracile, le thiadiazole, la triazine et la pyrazine. D'autre part, le métal M est de préférence un métal alcalin, un alcalino-terreux ou un métal de transition bivalent.

On préfère utiliser un électrolyte constitué d'un polymère contenant des chaînes polyéther, plus particulièrement le polyoxyde d'éthylène. Le lithium est le métal que l'on utilise le plus souvent.

Selon une autre réalisation préférée de l'invention, le générateur est assemblé à l'état partiellement ou totalement déchargé, la cathode étant principalement sous forme de chaînes courtes terminées aux deux extrémités par des groupes SRSM où S, R, et M sont tels que définis plus haut. Dans ce cas, la cathode contient alors du métal M de l'anode sous forme ionique.

Selon une autre réalisation préférée de l'invention, une partie plus ou moins important du métal de l'anode est présente dans la cathode; préférentiellement sous forme symétrique MS-R-S-(S-R-S)$_m$S-R-SM où m est un nombre inférieur à n, ou sous la forme entièrement réduite MS-R-SM où M représente le lithium et R et S sont tels que définis plus haut.

Selon une autre réalisation préférée de l'invention, les matériaux actifs de la cathode sont partiellement solubilisés dans l'électrolyte et forment à la surface de l'anode un film isolant électrique mais conducteur ionique qui protège l'anode d'une réation chimique irréversible et complète avec les matériaux solubles de la cathode.

Selon une autre réalisation préférée de l'invention, R peut aussi désigner un groupement organique cyclique et au moins difonctionnel comportant des carbones porteurs d'au moins deux atomes de soufre du thiol.

L'invention porte évidemment aussi sur la cathode en soi telle que définie ci-dessus.

Les matériaux organiques constitutifs du générateur et de la cathode selon la présente invention utilisent la réaction d'oxydation duplicative des anions dérivés des thiols pour former des liaisons disulfures:

$$2Li^{+}\ {}^{-}S\text{-}R \rightleftharpoons 2e^{-} + 2Li^{+} + R\text{-}S\text{-}S\text{-}R$$

Cette réaction est réversible, mais lente au point de vue électrochimique, surtout pour les thiols aliphatiques. Il apparaît dans la présente invention qu'une conjugaison du soufre avec un atome d'azote rende cette réaction plus rapide, et aussi qu'elle se produise à un potentiel plus élevé (3V/Li$^{o}$), soit un gain d'environ 500 mV. Ceci s'explique par une délocalisation partielle de la charge sur l'atome d'azote:

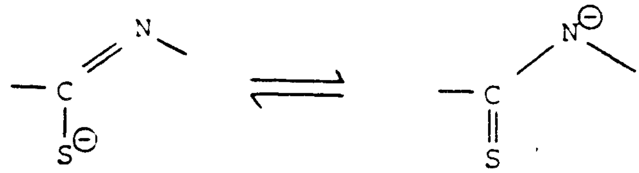

Ce couplage redox peut fonctionner en phase solide avec des molécules possédant au moins deux atomes de soufre de type thiol.

La réaction redox correspond alors à une polymérisation que l'on peut représenter par la réaction suivante:

$$(n+2)\ LiS-R-SLi \rightleftharpoons (2n+2)\,e^{-} + (2n+2)\,Li^{+} + LiS-R-S(S-R-S)_{n}S-R-SLi$$

Cette réaction est semblable à celle qui régit la formation des différents polysulfures $S_n^{2-}$. La forme la plus oxydée est le polymère neutre $(S\text{-}R\text{-}S)_{\infty}$, la forme la plus réduite est LiS-R-SLi.

Pour illustrer la présente invention, mais de façon non-limitative, les deux composés cycliques suivants sont utilisés:

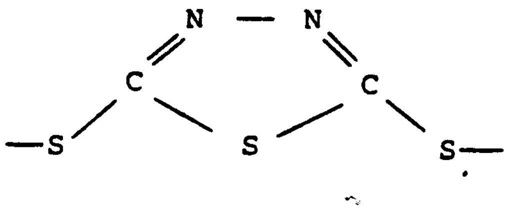

dimercaptothiadiazole

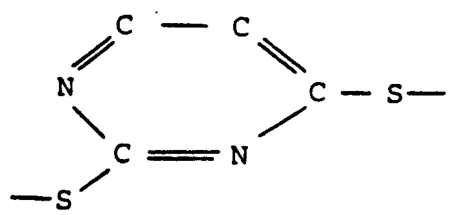

dithiouracile

Ces deux composés cycliques sont des exemples de molécules donnant des polymères linéaires par oxydation et dont chaque atome de soufre est conjugé avec au moins un atome d'azote en position adjacente au carbone porteur de la liaison soufre. Un grand nombre de composés possédant au moins deux atomes de soufre de type dithiol et dont les atomes de soufre sont conjugés à des atomes d'azote voisins existent ou sont possibles qui respectent cet arrangement, particulièrement favorable à l'état solide, à la réversibilité de la polymérisation redox. Par exemple, on peut mentionner aussi des dérivés de la triazine, de la pyrazine et autres.

Les générateurs au lithium basés sur le dimercaptothiadiazole et le dithiouracile ont des énergies massiques théoriques très élevées, 1030 et 1070 Wh/Kg respectivement à 3 Volts.

Dans les dessins qui illustrent l'invention,

les FIGURES 1a et 1b sont des représentations schématiques, d'un générateur selon la présente invention, respectivement à l'état chargé et à l'état déchargé;

la FIGURE 2 illustre l'allure du plateau de décharge d'un générateur électrochimique selon la présente invention, au premier cycle ainsi qu'aux cycles 2 et 12;

la FIGURE 3 est une courbe semblable à celle de la FIGURE 2 mais pour un autre générateur selon la présente invention, aux 1$^{er}$, 2$^{e}$, 40$^{e}$ et 100$^{e}$ cycles;

la FIGURE 4 est une courbe pour un autre générateur selon l'invention aux 1$^{er}$, 2$^{e}$ et 20$^{e}$ cycles; et

la FIGURE 5 est une courbe pour un autre générateur selon l'invention, aux cycles 1, 10 et 100 ainsi que l'allure des plateaux de décharge et charge au cycle 10.

Le générateur de la Figure 1(a) est illustré à l'état chargé, 1 représente l'anode, $Li^{o}$ ou alliage de lithium, pleinement chargée, 2 représente l'électrolyte polymère conducteur par les ions $Li^{+}$, 3 représente le collecteur de la cathode, métal et/ou noir ou polymère à conduction électronique et 4 représente le matériau actif de la cathode à l'état chargé, majoritairement sous forme R-S-S-R, généralement présent sous forme de mélange composite avec l'électrolyte 2.

Le second générateur, Figure 1(b) est illustré à l'état déchargé.

5 représente l'anode, $Li^{o}$ ou alliage de $Li^{o}$, partiellement ou majoritairement à l'état déchargé, 6 représente l'électrolyte polymère conducteur par les ions $Li^{+}$ et 7 représente le matériau actif de la cathode à l'état déchargé, majoritairement sous forme Li-S-R-S-Li, généralement présent sous forme de mélange composite avec l'électrolyte 6 luimême susceptible de contenir une fraction soluble plus ou moins importante du composé actif de la cathode.

L'origine des matériaux et la façon de fabriquer les diverses éléments de ces générateurs sont déjà décrits par l'art antérieur et ne font pas partie intégrante de la présente invention; les composés correspondant à la formule R-S-S-R utilisés pour les exemples qui suivent peuvent être préparés par oxydation par l'iode des sels alcalins ou de l'acide correspondant. Par exemple, le sel de potassium (Aldrich Cat. No. 13,943-2) peut être utilisé pour préparer le 2,5 dimercaptothiadiazole et la forme acide (Aldrich, Cat. No. 15, 846-1) peut être utilisée pour préparer le dithiouracyle.

L'invention va maintenant être illustrée par les exemples non limitatifs qui suivent.

EXEMPLE 1

Dans cet exemple le générateur est constitué d'une anode de lithium d'environ 40 µm d'épaisseur laminé sur un feuillard de nickel, l'électrolyte polymère est un copolymère principalement constitué d'oxyde d'éthylène et de -15% mole de méthyl glycidyl éther dans lequel est dissous un sel de $(CF_3SO_2)_2NLi$ dans le rapport: oxygène du polymère/lithium de 30/1; l'électrode positive est constitué d'un mélange de dithiouracile solide sous forme polymérisée, d'un additif de noir d'acéthylène et de l'électrolyte polymère précédemment décrit; les proportions en poids du mélange sont: dithiouracile 43 %, noir 14 % et polymère 43 %. La cathode composite ainsi que l'électrolyte sont préparés sous forme de films minces d'environ 20 µm d'épaisseur par épandage puis séchage d'une solution de l'électrolyte dans de l'acétonitrile, dans le cas de la cathode composite le noir et le dithiouracile sont au préalable dispersés mécaniquement dans la solution d'électrolyte. La capacité en Coulomb de l'électrode positive ainsi constituée est de 1.6 $C/cm^2$ et la surface effective de la cathode est de 3.86 $cm^2$.

Le générateur est assemblé par pressage à chaud, vers 60°C. La force électromotrice observée après assemblage est de 2.84 Volts. La cellule est mise à cycler, à 25°C à courant constant, $I_d$=50 microAmpère en décharge et $I_c$=25 microAmpère en charge, et avec des limites de voltage en charge de 3.2V et en décharge de 2.2V. La figure 2 illustre l'allure du plateau de décharge au premier cycle (D-1) ainsi qu'aux cycles 2 et 12 (D-2 et D-12). On constate qu'après une perte initiale de capacité le générateur conserve sa capacité et que le plateau de décharge demeure sensiblement le même. Ceci illustre bien la capacité du matériau de l'électrode à base de dithiouracile de reprendre sa charge et de cycler de façon reproductible même si le taux d'utilisation demeure limité pour ce dispositif encore peu optimisé pour ce qui est de la composition et de la configuration de l'électrode en fonction d'un taux d'utilisation élevé.

EXEMPLE 2

Générateur semblable à celui de l'exemple 1, mais que l'on fait cycler à 60°C. Les résultats sont illustrés à la figure 3 et confirment un comportement en cyclage équivalent à celui observé à l'ambiante mais avec une chute ohmique moindre et un taux supérieur d'utilisation du matériau. Après une quarantaine de cycles l'allure du plateau de décharge prend une forme stable avec un voltage moyen de décharge voisin de 2.5V. Un effet de chute ohmique temporaire est visible au début de la décharge et pourrait s'expliquer par une variation de la conductivité du matériau de cathode lors de la décharge ou par la destruction d'un film de passivation sur l'électrode de lithium pouvant résulter d'une solubilisation partielle du matériau cathodique dans l'électrolyte ou la présence d'impuretés dans ce dernier. Ce phénomène encore mal identifié n'affecte pas cependant les bonnes propriétés de cyclage du générateur.

EXEMPLE 3

Générateur semblable à celui des exemples 1 et 2 mais dans lequel le matériau actif de la cathode est le poly(2,5 dimercaptothiadiazole). Les proportions massiques des matériaux utilisés sont respectivement: 44 % pour le poly(dimercaptothiadiazole), 12% pour le noir et 44% pour l'électrolyte. La force électromotrice observée au départ est dans ce cas de 3.06 Volts. Le générateur est mis ensuite à cycler durant 20 cycles consécutifs. Les plateaux de décharge sont illustrés à la figure 4 et confirment l'excellente cyclabilité du système après une baisse initiale de capacité après la première décharge.

EXEMPLE 4

Générateur semblable à celui de l'exemple 3 mais dans lequel le générateur est cyclé à 60°C. La figure 5 illustre l'évolution des plateaux de décharge au cours des cycles successifs et confirme bien l'excellente cyclabilité du système après une stabilisation initiale des performances. La force électromotrice observée initialement est de 3.05 Volts et le plateau moyen de décharge est voisin de 2.6V mais avec deux plateaux sensiblement équivalents à ~2.8V et 2.5V. Cette figure illustre également l'allure des plateaux de décharge et de charge au cycle 10 (D-10 et C-10). Bien que non illustré sur cette figure on constate d'autre part à 60°C et encore plus à 80°C que l'influence des densités courants utilisés en décharge affecte peu le taux d'utilisation du 2,5 dimercaptothiadiazole entre 50 et 200 microAmpère, ce qui confirme bien la bonne cinétique de la dépolymérisation/polymérisation redox du 2,5 dimercaptothiadiazole et la

capacité de cette électrode de soutenir des densités de puissance soutenue élevées.

## Revendications

1. Générateur électrochimique rechargeable à l'état solide comprenant une anode d'un métal M, sous forme généralement pure ou alliée pouvant constituer une source de cations dudit métal, en contact avec un électrolyte polymère constitué d'au moins un sel dudit métal M de l'anode dissous dans un polymère solvatant contenant des hétéroatomes d'oxygène et/ou d'azote capables de solvater les cations dudit métal M, M représentant un métal pouvant entrer dans la composition d'une anode qui peut être mise en contact avec ledit électrolyte polymère et, d'une cathode également en contact avec ledit électrolyte et avec un conducteur électronique constitué d'au moins un métal, de noir de carbone ou d'un polymère conducteur électronique; ladite cathode à l'état au moins partiellement chargé contenant au moins un polymère caractérisé par des chaînes du type $X\text{-}S\text{-}R\text{-}S\text{-}(S\text{-}R\text{-}S)_n\text{-}S\text{-}R\text{-}S\text{-}X'$,
   où

   n est un nombre égal ou supérieur à 0,
   X et X' sont soit un métal y compris le métal M, soit l'hydrogène ou un groupement organique terminal,
   S est le soufre, et
   R désigne un groupement organique, cyclique et difonctionnel comportant des carbones porteurs des deux atomes de soufre S du dithiol, lesdits carbones étant liés chimiquement avec au moins un atome d'azote de façon à permettre la délocalisation par conjugaison du type,

   $$S^{\ominus}\text{-}C\text{=}N\text{-} \leftrightarrow S\text{=}C\text{-}N^{\ominus}\text{-}$$

   de la charge négative et la réduction électrochimique réversible des atomes de soufre S lors de la coupure des liens S-S- pour donner des chaînons plus courts terminés aux deux extrémités par des groupes -S-R-SM, lorsque la cathode est à l'état plus ou moins déchargé.

2. Générateur selon la revendication 1 dans lequel le groupement R est un hétérocycle permettant à chaque atome de soufre rattaché à ce cycle d'assurer une conjugaison des liaisons avec au moins un atome d'azote de l'hétérocycle.

3. Générateur selon la revendication 1, dans lequel le groupement R est choisi parmi l'uracile, le thiadiazole, la triazine et la pyrazine.

4. Générateur selon les revendications 1 ou 2, dans lequel le métal M est un métal alcalin, un alcalino-terreux ou un métal de transition bivalent.

5. Générateur selon les revendications 1, 2 ou 3, dans lequel l'électrolyte est constitué d'un polymère contenant des chaînes polyéther.

6. Générateur selon les revendications 1, 2 ou 3, dans lequel l'électrolyte est constitué de polyoxyde d'éthylène.

7. Générateur selon la revendication 1 dans lequel le métal M est le lithium.

8. Générateur selon la revendication 1, assemblé à l'état partiellement ou totalement déchargé, la cathode étant principalement sous forme de chaînes courtes terminées aux deux extrémités par des groupes SRSM où S, R, et M sont tels que définis dans la revendication 1, et ladite cathode contenant alors du métal M de l'anode sous forme ionique.

9. Générateur selon la revendication 7, dans lequel du métal M de l'anode est présent dans la cathode.

10. Générateur selon la revendication 9, dans lequel le métal M de l'anode est présent dans la cathode sous forme symétrique $MS\text{-}R\text{-}S\text{-}(S\text{-}R\text{-}S)_m S\text{-}R\text{-}SM$ où m est un nombre inférieur à n.

11. Générateur selon la revendication 9, dans lequel le métal M de l'anode est présent dans la cathode sous la forme entièrement réduite MS-R-SM, où M représente le lithium et R et S sont tels que définis dans la revendication 1.

12. Générateur selon la revendication 8, dans lequel les matériaux actifs de la cathode sont partiellement solubilisés

dans l'électrolyte et forment à la surface de l'anode un film isolant électrique mais conducteur ionique qui protège l'anode d'une réaction chimique irréversible et complète avec les matériaux solubles de ladite cathode.

**13.** Cathode, pour générateur chimique rechargeable à l'état solide, ledit générateur comportant une anode d'un métal M, sous forme généralement pure ou alliée pouvant constituer une source de cations dudit métal, ladite anode étant en contact avec un électrolyte polymère constitué d'au moins un sel dudit métal M de l'anode, dissous dans un polymère solvatant contenant des hétéroatomes d'oxygène et/ou d'azote et capable de solvater les cations dudit métal M, M représentant un métal pouvant entrer dans la composition d'une anode qui peut être mise en contact avec ledit électrolyte polymère, ledit générateur comportant aussi une cathode également en contact avec ledit électrolyte et avec un conducteur électronique constitué d'au moins un métal, de noir de carbone ou d'un polymère conducteur électronique caractérisée en ce que ladite cathode à l'état chargé ou partiellement chargé, comprend au moins un polymère possédant des chaînes de type

$$X\text{-}S\text{-}R\text{-}S\text{-}(S\text{-}R\text{-}S)_n\text{-}S\text{-}R\text{-}S\text{-}X'$$

où

n est un nombre égal ou supérieur à 0;
X et X' représentent un métal y compris le métal M, l'hydrogène ou un groupement organique terminal;
S représente le soufre; et
R désigne un groupement organique cyclique et au moins difonctionnel comportant des carbones porteurs d'au moins deux atomes de soufre du thiol, lesdits carbones étant liés chimiquement avec au moins un atome d'azote de façon à permettre la délocalisation, par conjugaison du type

$$S^{\ominus}\text{-}C\text{=}N\text{-} \leftrightarrow S\text{=}C\text{-}N^{\ominus}\text{-},$$

de la charge négative, et la réduction électrochimique réversible des atomes de soufre lors de la coupure des liens -S-S- pour donner des chaînons plus courts terminés aux deux extrémités par des groupes -S-R-SM lorsque la cathode est à l'état plus ou moins déchargé.

**14.** Cathode selon la revendication 10, dans laquelle le groupement R est un hétérocycle permettant à chaque atome de soufre rattaché au cycle d'assurer une conjugaison des liaisons avec au moins un atome d'azote de l'hétérocycle.

**15.** Cathode selon la revendication 10, dans laquelle le groupement R est choisi parmi l'uracile, le thiadiazole, la triazine et la pyrazine.

**16.** Cathode selon la revendication 10, à l'état totalement déchargé, caractérisée par une composition de formule MS-R-SM, ou M, S et R sont tels que définis dans la revendication 1.

## Claims

**1.** Solid-state rechargeable electrochemical generator comprising an anode made from a metal M, in a generally pure or alloyed form able to constitute a source of cations of the said metal, in contact with a polymeric electrolyte consisting of at least one salt of the said metal M of the anode dissolved in a polymeric solvent containing heteroatoms of oxygen and/or nitrogen capable of dissolving the cations of the said metal M, M representing a metal able to be a constituent of an anode which may be brought into contact with the said polymeric electrolyte, and of a cathode also in contact with the said electrolyte and with a conductor of electrons consisting of at least one metal, carbon black or a polymer able to conduct electrons; the said cathode, in an at least partially charged state, containing at least one polymer characterised by chains of the type $X\text{-}S\text{-}R\text{-}S\text{-}(S\text{-}R\text{-}S)_n\text{-}S\text{-}R\text{-}S\text{-}X'$,
where

n is a number equal to or greater than 0,
X and X' are either a metal, including the metal M, or hydrogen or a terminal organic grouping,
S is sulphur, and
R designates a cyclic difunctional organic grouping including carbon atoms carrying two atoms of sulphur S of dithiol, the said carbon atoms being bonded chemically with at least one nitrogen atom so as to allow delocalisation by conjugation of the type

$$S^{\ominus}\text{-C=N-} \leftrightarrow \text{S=C-N}^{\ominus}\text{-}$$

of the negative charge and reversible electrochemical reduction of the atoms of sulphur S when the S-S- bonds are broken to give shorter chains terminating at both ends in the groups -S-R-SM, when the cathode is in a more or less discharged state.

**2.** Generator according to Claim 1, in which the grouping R is a heterocycle enabling each sulphur atom attached to this ring to provide a conjugation of the bonds with at least one nitrogen atom of the heterocycle.

**3.** Generator according to Claim 1, in which the grouping R is chosen from amongst uracil, thiadiazole, triazine and pyrazine.

**4.** Generator according to Claims 1 or 2, in which the metal M is an alkaline metal, an alkaline-earth or a divalent transition metal.

**5.** Generator according to Claims 1, 2 or 3, in which the electrolyte consists of a polymer containing polyether chains.

**6.** Generator according to Claims 1, 2 or 3, in which the electrolyte consists of ethylene polyoxide.

**7.** Generator according to Claim 1, in which the metal M is lithium.

**8.** Generator according to Claim 1, assembled in the partially or completely discharged state, the cathode being principally in the form of short chains terminating at both ends in groups SRSM in which S, R and M are as defined in Claim 1, and the said cathode then containing metal M of the anode in ion form.

**9.** Generator according to Claim 7, in which some of the metal M of the anode is present in the cathode.

**10.** Generator according to Claim 9, in which the metal M of the anode is present in the cathode in a symmetrical form MS-R-S-(S-R-S)$_m$S-R-SM where m is a number less than n.

**11.** Generator according to Claim 9, in which the metal M of the anode is present in the cathode in the completely reduced form MS-R-SM, where M represents lithium and R and S are as defined in Claim 1.

**12.** Generator according to Claim 8, in which the active metals of the cathode are partially solubilised in the electrolyte and form, on the surface of the anode, an electrically insulating but ionically conducting film which protects the anode from a complete and irreversible chemical reaction with the soluble materials of the said cathode.

**13.** Cathode for a solid-state rechargeable chemical generator, the said generator including an anode made from a metal M, in a generally pure or alloyed form able to constitute a source of cations of the said metal, the said anode being in contact with a polymeric electrolyte consisting of at least one salt of the said metal M of the anode, dissolved in a polymeric solvent containing heteroatoms of oxygen and/or nitrogen and capable of dissolving the cations of the said metal M, M representing a metal able to be a constituent of an anode which may be brought into contact with the said polymeric electrolyte, the said generator also including a cathode also in contact with the said electrolyte and with a conductor of electrons consisting of at least one metal, carbon black or a polymer able to conduct electrons, characterised in that the said cathode in the charged or partially charged state comprises at least one polymer having chains of the type X-S-R-S-(S-R-S)$_n$-S-R-S-X'
where

n is a number equal to or greater than 0;
X and X' represent a metal, including the metal M, hydrogen or a terminal organic grouping;
S represents sulphur; and
R designates an organic grouping which is cyclic and at least difunctional, including carbon atoms carrying at least two atoms of thiol sulphur, the said carbon atoms being bonded chemically with at least one nitrogen atom so as to allow delocalisation, by conjugation of the type

$$S^{\ominus}\text{-C=N-} \leftrightarrow \text{S=C-N}^{\ominus}\text{-,}$$

of the negative charge, and reversible electrochemical reduction of the sulphur atoms when the -S-S- bonds

are broken to give shorter chains terminating at both ends in groups -S-R-SM when the cathode is in a more or less discharged state.

**14.** Cathode according to Claim 10, in which the grouping R is a heterocycle enabling each sulphur atom attached to the ring to provide a conjugation of the bonds with at least one nitrogen atom of the heterocycle.

**15.** Cathode according to Claim 10, in which the grouping R is chosen from amongst uracil, thiadiazole, triazine and pyrazine.

**16.** Cathode according to Claim 10, in the completely discharged state, characterised by a composition of the formula MS-R-SM, where M, S and R are as defined in Claim 1.

**Patentansprüche**

**1.** Wiederaufladbarer elektrochemischer Generator im festen Zustand, umfassend eine Anode aus einem Metall M in einer im allgemeinen reinen oder legierten Form, welche eine Quelle für Kationen des Metalls bilden kann und in Kontakt ist mit einem polymeren Elektrolyten, der mindestens aus einem Salz des Anodenmetalls M aufgebaut ist, das in einem solvatisierenden Polymer gelöst ist, welches Sauerstoff- und/oder Stickstoff-Heteroatome enthält, die zum Solvatisieren der Kationen des Metalls M fähig sind, wobei M ein Metall repräsentiert, das Bestandteil der Zusammensetzung einer Anode sein kann, die in Kontakt gebracht sein kann mit dem polymeren Elektrolyten, und eine Kathode, die ebenfalls in Kontakt ist mit dem Elektrolyten und mit einem elektronischen Leiter, der aus wenigstens einem Metall, Kohleschwarz oder einem polymeren elektronischen Leiter gebildet wird, wobei die Kathode im wenigstens teilweise geladenen Zustand wenigstens ein Polymer enthält, das durch Ketten des Typs X-S-R-S-$(S\text{-}R\text{-}S)_n$-S-R-S-X'
gekennzeichnet ist, worin

n eine Zahl gleich oder größer 0 ist,
X und X' ein Metall, umfassend das Metall M, Wasserstoff oder eine terminale organische Gruppe sein können,
S Schwefel ist, und
R eine cyclische und difunktionelle organische Gruppe bedeutet, die Kohlenstoffatome enthält, welche die beiden Schwefelatome von Dithiol tragen, wobei die Kohlenstoffatome mit wenigstens einen Stickstoffatom derart chemisch verbunden sind, daß die Delokalisierung der negativen Ladung durch Konjugation des Typs

$$S^{-}\text{-}C{=}N\text{-} \qquad S{=}C\text{-}N^{-}\text{-}$$

und die reversible elektrochemische Reduktion der Schwefelatome S während der Trennung der S-S Bindungen ermöglicht ist, um viel kürzere Kettenglieder zu ergeben, die an den beiden Enden durch -S-R-SM-Gruppen terminiert sind, wenn die Kathode im mehr oder weniger entladenen Zustand ist.

**2.** Generator nach Anspruch 1, worin die Gruppe R ein Heterocyclus ist, der es jedem an diesen Cyclus gebundenen Schwefelatom erlaubt für eine Konjugation der Bindungen mit wenigstens einem Stickstoffatom des Heterocyclus zu sorgen.

**3.** Generator nach Anspruch 1, worin die Gruppe R ausgewählt ist zwischen Uracil, Thiadiazol, Triazin oder Pyrazin.

**4.** Generator nach Anspruch 1 oder 2, worin das Metall M ein Alkalimetall, Erdalkalimetall oder ein bivalentes Übergangsmetall ist.

**5.** Generator nach Anspruch 1, 2 oder 3, worin der Elektrolyt aus einem Polymer besteht, das Polyether-Ketten enthält.

**6.** Generator nach Anspruch 1, 2 oder 3, worin der Elektrolyt aus Polyoxyethylen besteht.

**7.** Generator nach Anspruch 1, worin das Metall M Lithium ist.

**8.** Generator nach Anspruch 1, worin in der Anordnung im teilweise oder vollständig entladenen Zustand die Kathode im wesentlichen in Form von kurzen Ketten vorliegt, die durch zwei Enden aus SRSM terminiert sind, wobei S, R und M wie in Anspruch 1 definiert sind und worin die Kathode das Metall M der Anode in ionischer Form enthält.

**9.** Generator nach Anspruch 7, worin das Metall M der Anode in der Kathode vorliegt.

**10.** Generator nach Anspruch 9, worin das Metall M der Anode in der Kathode in symmetrischer Form MS-R-S-(S-R-S)$_m$S-R-SM vorliegt, worin m eine kleinere Zahl als n ist.

**11.** Generator nach Anspruch 9, worin das Metall M der Anode in der Kathode in vollständig reduzierter Form MS-R-SM vorliegt, wobei M Lithium bedeutet und R und S wie in Anspruch 1 definiert sind.

**12.** Generator nach Anspruch 8, worin die aktiven Materialien der Kathode teilweise in dem Elektrolyten gelöst sind und auf der Oberfläche der Anode einen Film bilden, der elektrisch isolierend, aber ionisch leitend ist, welcher Film die Anode vor einer irreversiblen chemischen Reaktion schützt und sich mit den löslichen Materialien der Kathode ergänzt.

**13.** Kathode für einen wiederaufladbaren chemischen Generator im festen Zustand, wobei der Generator eine Anode aus einem Metall M in einer im allgemeinen reinen oder legierten Form umfaßt, welche eine Quelle für Kationen des Metalls bilden kann und in Kontakt ist mit einem polymeren Elektrolyten, der mindestens aus einem Salz des Anodenmetalls M aufgebaut ist, das in einem solvatisierenden Polymer gelöst ist, welches Sauerstoff- und/oder Stickstoff-Heteroatome enthält, die zum Solvatisieren der Kationen des Metalls M fähig sind, wobei M ein Metall repräsentiert, das Bestandteil der Zusammensetzung einer Anode sein kann, die in Kontakt gebracht sein kann mit dem polymeren Elektrolyten, wobei der Generator auch eine Kathode enthält, die ebenfalls in Kontakt ist mit dem Elektrolyten und mit einem elektronischen Leiter, der aus wenigstens einem Metall, Kohleschwarz oder einem polymeren elektronischen Leiter gebildet wird, dadurch gekennzeichnet, daß die Kathode im geladenen oder teilweise geladenen Zustand wenigstens ein Polymer umfaßt, das Ketten des Typs

$$X\text{-}S\text{-}R\text{-}S\text{-}(S\text{-}R\text{-}S)_n\text{-}S\text{-}R\text{-}S\text{-}X'$$

enthält, worin n eine Zahl gleich oder größer 0 ist,
X und X' ein Metall, einschließlich dem Metall M, Wasserstoff oder eine terminale organische Gruppe bedeuten,
S Schwefel ist, und
R eine cyclische und wenigstens difunktionelle organische Gruppe bedeutet, die Kohlenstoffatome enthält, welche wenigstens die beiden Schwefelatome von Dithiol tragen, wobei die Kohlenstoffatome mit wenigstens einem Stickstoffatom derart chemisch verbunden sind, daß die Delokalisierung der negativen Ladung durch Konjugation des Typs

$$S^{-}\text{-}C\text{=}N\text{-} \qquad S\text{=}C\text{-}N^{-}\text{-}$$

und die reversible elektrochemische Reduktion der Schwefelatome S während der Trennung der S-S Bindungen ermöglicht ist, um kürzere Kettenglieder zu ergeben, die an den beiden Enden durch -S-R-SM-Gruppen terminiert sind, wenn die Kathode im mehr oder weniger entladenen Zustand ist.

**14.** Kathode nach Anspruch 10, worin die Gruppe R ein Heterocyclus ist, der es jedem am Cyclus gebundenen Schwefelatom erlaubt für eine Konjugation der Bindungen mit wenigstens einem Stickstoffatom des Heterocyclus zu sorgen.

**15.** Kathode nach Anspruch 10, worin die Gruppe R ausgewählt ist zwischen Uracil, Thiadiazol, Triazin oder Pyrazin.

**16.** Kathode nach Anspruch 10, im vollständig entladenen Zustand, gekennzeichnet durch eine Verbindung der Formel MS-R-SM, worin M, S und R wie in Anspruch 1 definiert sind.

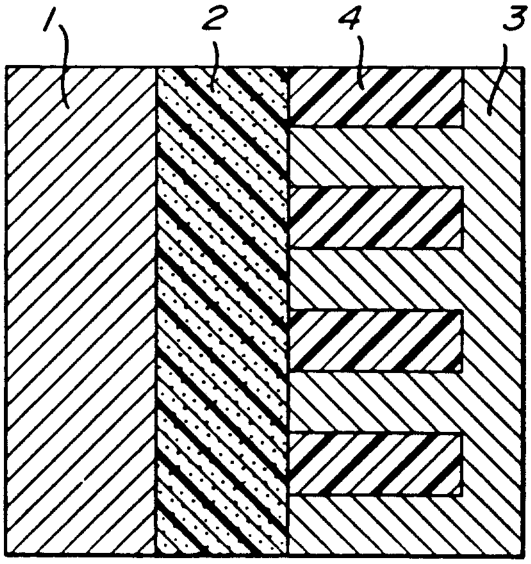


FIG. 1A

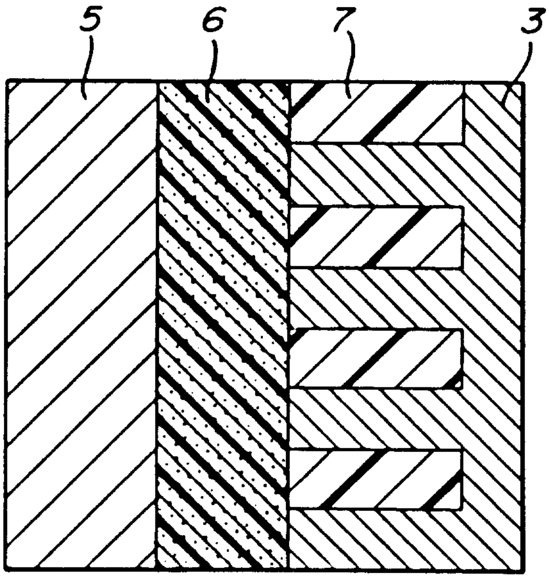


FIG. 1B

FIG. 2

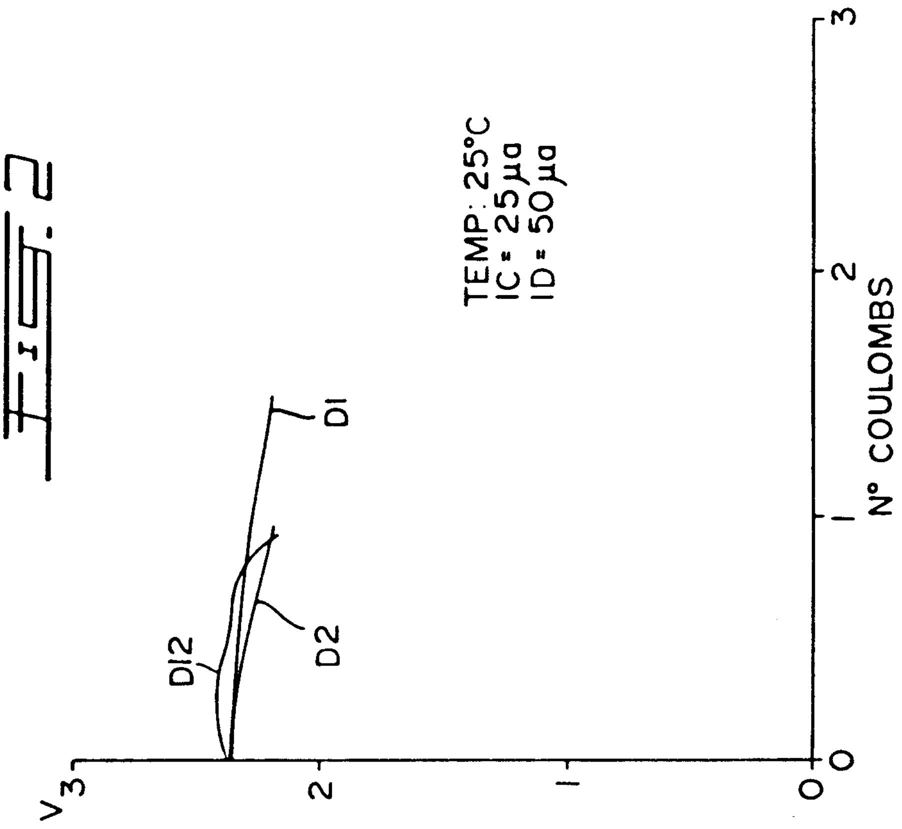
V
3
2
1
0
0
1
2
3
N° COULOMBS
DI2
D2
DI
TEMP: 25°C
IC = 25 μa
ID = 50 μa

FIG. 4

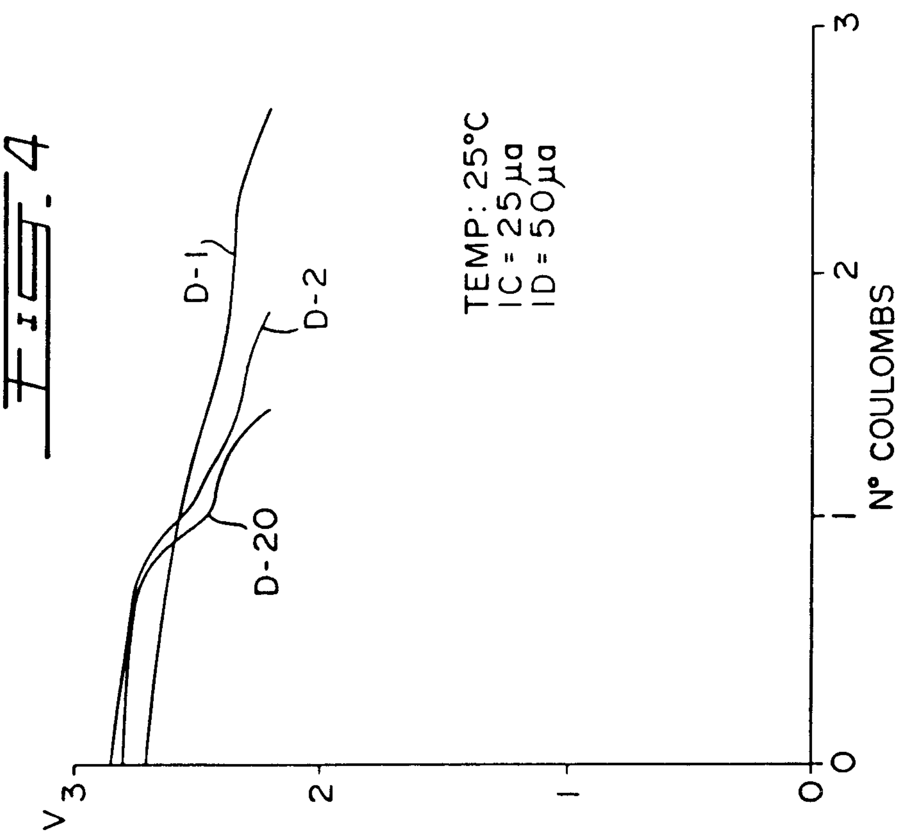
V
3
2
1
0
0
1
2
3
N° COULOMBS
D-1
D-2
D-20
TEMP: 25°C
IC = 25 μa
ID = 50 μa

FIG. 3

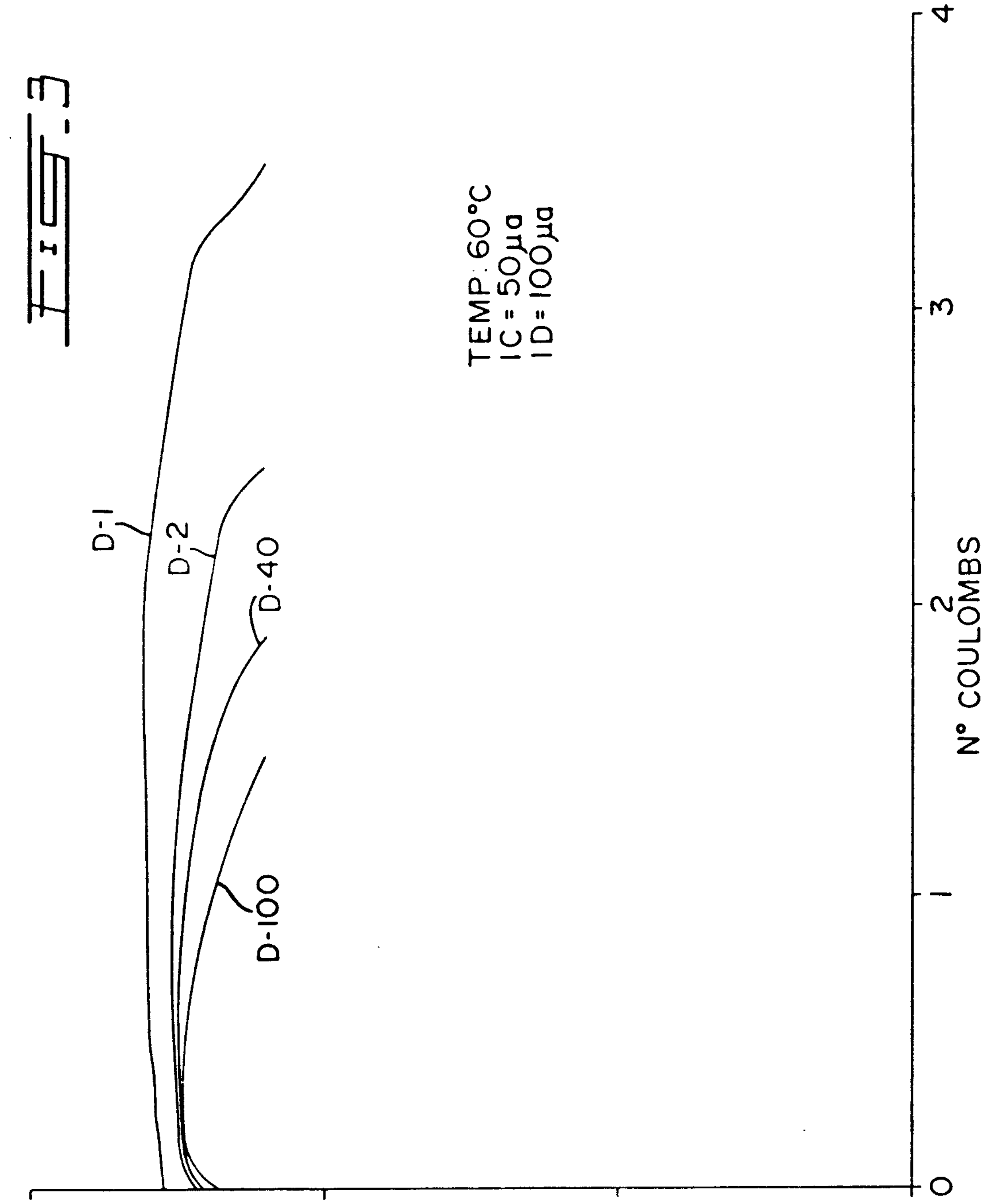

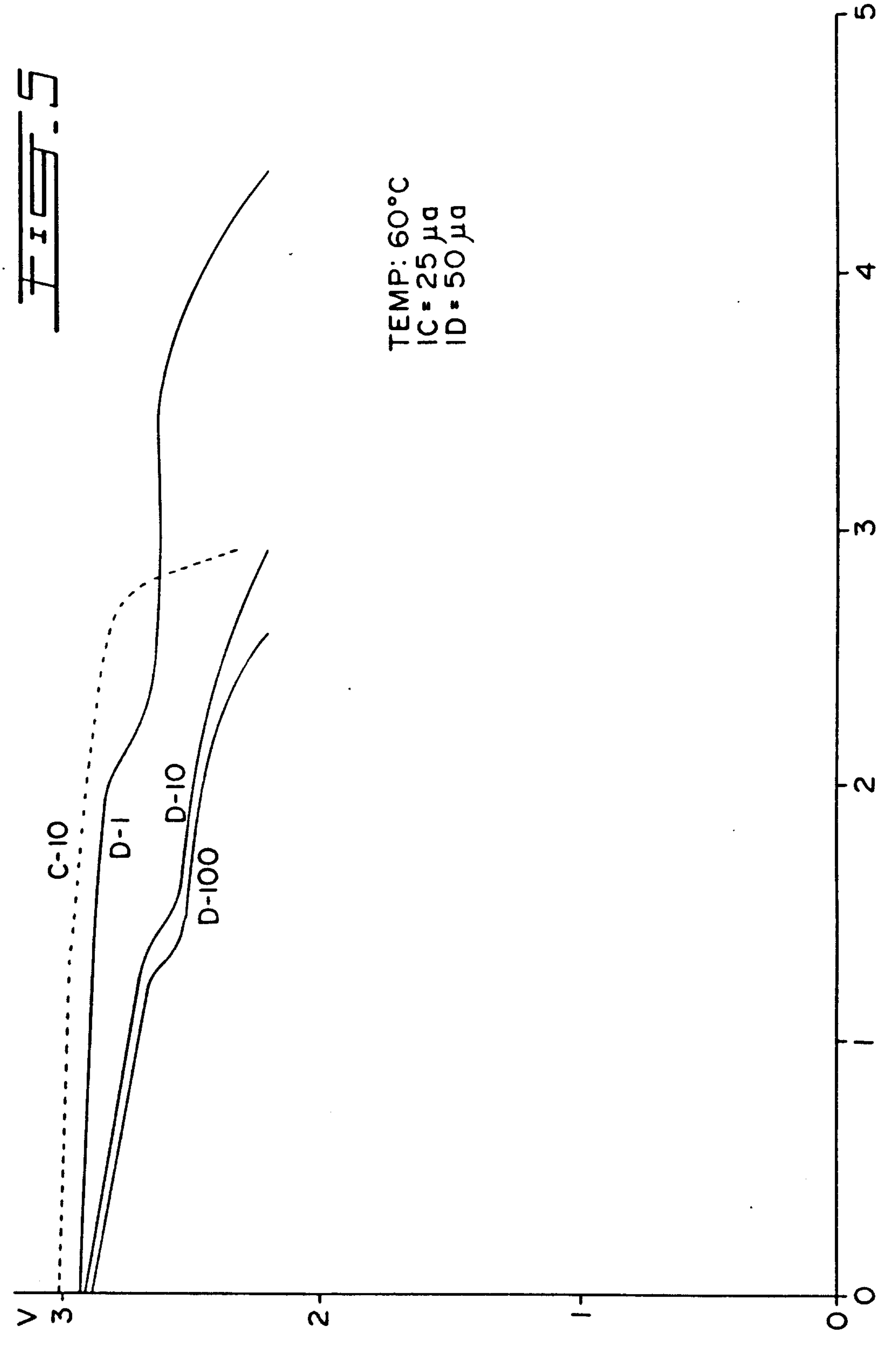
C-10
D-1
D-10
D-100
TEMP: 60°C
IC = 25 μa
ID = 50 μa
V
3
2
1
0
0
1
2
3
4
5
N° COULOMBS

FIG. 5